# EUROPÄISCHE PATENTSCHRIFT

(11) **EP 1 314 536 B1**
(45) Veröffentlichungstag und Bekanntmachung des Hinweises auf die Patenterteilung: **28.04.2004**
(21) Anmeldenummer: 02025299.5
(22) Anmeldetag: 13.11.2002
(51) Int. Cl.: B29C 51/44

(54) **Vorrichtung zum Formen und Ausstanzen von Behältern aus einer Folienbahn aus thermoplastischem Kunststoff**
Apparatus for forming recipient articles in a thermoplastic sheet, and stacking the articles in a stacking receiver
Dispositif pour le formage de récipients en matière plastique à partir d'une bande, et de stockage de ces récipients dans un receptacle

(30) Priorität: 21.11.2001 DE 10157134
(43) Veröffentlichungstag der Anmeldung: 28.05.2003
(73) Patentinhaber: Adolf Illig Maschinenbau GmbH & Co. KG, 74081 Heilbronn (DE)
(72) Erfinder: Kiefer, Günther, 74193 Schwaigern (DE)

(56) Entgegenhaltungen:
- DE-A- 3 346 628
- DE-A- 3 601 937
- DE-A- 19 710 475
- DE-U- 9 108 344
- US-A- 6 135 756

## Beschreibung

Die Erfindung betrifft eine Vorrichtung zum Formen und Ausstanzen von Behältern aus einer Folienbahn aus thermoplastischem Kunststoff nach der Gattung des Hauptanspruches.

Aus der DE 33 46 628 C 2 ist eine Vorrichtung mit einer kombiniert formenden und stanzenden Formstation bekannt, bei der der Untertisch, der das Unterteil mit den formgebenden Teilen des Form-/Stanzwerkzeuges trägt, nach dem Formen und Ausstanzen der Behälter um einen Winkel zwischen 30 und 90° geschwenkt wird. In dieser geschwenkten Lage werden die Behälter aus dem Unterteil in Stapelmagazine oder an eine Stapeleinrichtung übergeben. Der Untertisch ist femer axial verschiebbar, so dass das am Obertisch befestigte Oberteil des Form-/Stanzwerkzeuges mit der Schnittplatte und ggf. mit Streckhelfem ortsfest angeordnet werden kann.
Nachteilig bei dieser Ausführung ist es, dass - bedingt durch die vertikale Führung der Führungsteile, in denen der Untertisch drehbar gelagert ist - am Ende der Schwenkbewegung in Stapelstellung keine Verschiebung des Untertisches in Richtung der Stapelmagazine möglich ist. Wegen des Schwenkradius des Unterteils des Form-/Stanzwerkzeuges ist ein entsprechender Abstand zu einem ortsfesten Stapelmagazinen erforderlich, der Störungen bei der Übergabe von insbesondere flachen Teilen wie Deckeln verursacht. Dem kann durch eine Verschiebung der Stapelmagazine in Richtung Untertisch begegnet werden, was aber einen zweiten Antrieb erfordert und Synchronisationsprobleme mit sich bringt. Eine Kollision zwischen Unterteil und Stapelmagazinen an dieser Stelle hat schwerwiegende und teuere Folgen.

In der DE 197 16 655 A1 wird eine Vorrichtung beschrieben, bei der der Untertisch in einer Schwenkkulisse geführt ist, die um einen Drehpunkt zwischen einer Formstellung und einer Stapelstellung geschwenkt werden kann. Auch hier ist keine Bewegung des Untertisches in Richtung Stapelmagazine vorgesehen. Bei der gezeigten direkten Antriebsweise des Untertisches müssen die Kurvenrollen die ganze Formschließkraft und Stanzkraft aufnehmen, die sehr hoch sind. Ein rascher Verschleiß ist die Folge. Die Vorteile eines über einen Kniehebel in Strecktage gebrachten Untertisches in Formstellung sind bei diesem Antrieb nicht gegeben.

Aus der US 6 135 756 ist eine Vorrichtung bekannt, bei der der Untertisch geschwenkt und in Endlage in Richtung der Stapelmagazine verschoben wird. Hierzu trägt der Formtisch mehrere Kurvenrollen, die in sehr komplizierten, aufwendig herzustellenden Kurvenbahnen geführt sind, die in zwei ortsfesten, auf Abstand angeordneten Kulissen verlaufen. Beide Kulissen müssen exakt aufeinander abgestimmt sein, was einen hohen Montageaufwand erfordert und eine hohe Steifigkeit des ganzen Systems bedingt. Bewegt wird der Formtisch über einen seitlich angeordneten Antrieb, der über mehrere miteinander verbundene Schubstangen direkt am Formtisch angreift und seine Verschiebung bewirkt. Auch bei dieser Gestaltung der Vorrichtung müssen die Kurvenrollen eine hohe Schließkraft direkt aufnehmen.

Der Erfindung liegt die Aufgabe zugrunde, die Vorrichtung so zu gestalten, dass eine hohe Schließkraft bei geringer Belastung der Antriebselemente in der Formstellung über einen Kniehebelantrieb gegeben ist und eine Bewegung des Untertisches beim Anfahren der Stapelstellung in Richtung der Stapelmagazine erfolgt, sodass diese ortsfest angeordnet werden können und trotzdem nur ein geringer Abstand beim Ausstapeln überbrückt werden muss. Eine Kollisionsgefahr zwischen Untertisch und Stapelmagazinen sollte zu keinem Zeitpunkt bestehen. Hierzu sollten möglichst wenige, relativ einfach gestaltete Kurvenbahnen erforderlich sein.

Zur Lösung der Aufgabe werden die Merkmale des Hauptanspruches vorgeschlagen. Die Unteransprüche beschreiben vorteilhafte Weiterbildungen.

Ein Ausführungsbeispiel der Erfindung ist anhand der schematischen Zeichnungen näher beschrieben. Es zeigt:
- Fig. 1: eine Seitenansicht der Vorrichtung.
- Fig. 2: einen Querschnitt entlang der Linie A - A in Figur 1 durch die Formstation bei geschlossenem Werkzeug.
- Fig. 3: denselben Querschnitt durch die Formstation bei geschwenkter unterer Werkzeughälfte.

Die Vorrichtung besteht aus einer Formstation 18, einer Transporteinrichtung 2 zum intermittierenden Transport einer horizontal bewegten Folienbahn 19 durch die Vorrichtung und einer Heizeinrichtung 1, falls diese Folienbahn 19 von einer Rolle 20 abgewickelt wird. Wird die Folienbahn 19 direkt von einem Extruder zugeführt kann ggf. auf diese Heizeinrichtung 1 verzichtet werden.
Die Formstation 18 besteht aus einem ortsfesten Obertisch 3, an dem das Oberteil 4 eines kombinierten Form-/Stanzwerkzeuges befestigt ist. Dieses Oberteil 4 weist eine Schnittplatte und bei Bedarf Streckhelfer zum mechanischen Vorstrecken der Folienbahn 19 auf. Femer aus dem höhenbeweglichen und schwenkbaren Untertisch 5, an dem das Untereil 6 des Form-/Stanzwerkzeuges mit den formgebenden und stanzenden Bauteilen befestigt ist.
Das Schwenken des Untertisches 5 erfolgt durch die mit Position 22 bezeichnete Antriebseinrichtung in Form eines Kurventriebs entweder quer zur Durchlaufrichtung der Folienbahn 19, die durch den Pfeil 24 dargestellt ist. Ein Schwenken in Durchlaufrichtung der Folienbahn 19 ist in gleicher Weise bei um 90° gedreht angeordneter Antriebseinrichtung 22 möglich.

Nachfolgend ist die Antriebseinrichtung 22 näher beschrieben.

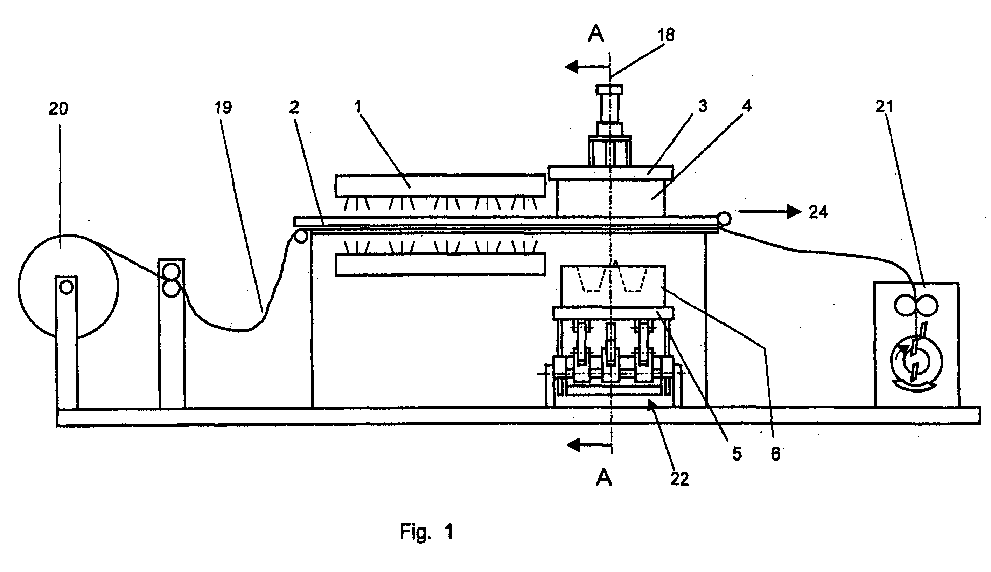

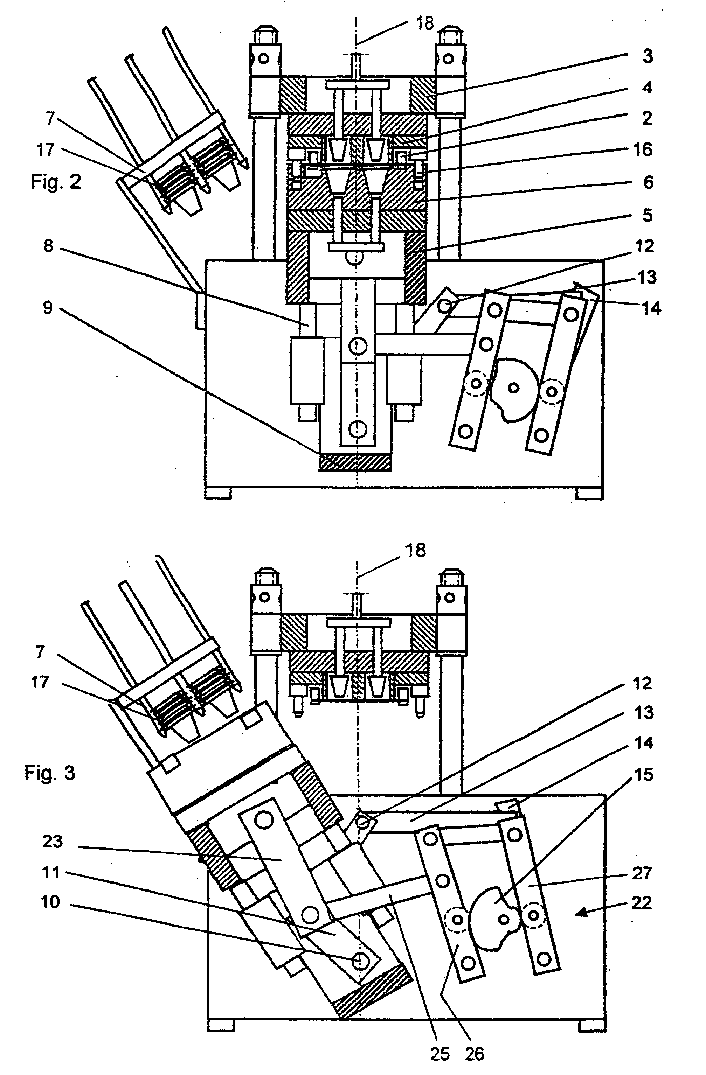

Der Untertisch 5 ist über Führungsholme 8 geführt, die in der Schwenkbrücke 9 gelagert sind. Die Schwenkbrücke 9 ist im Drehpunkt 10 gelagert, der gleichzeitig Drehpunkt für die unteren Kniehebellaschen 11 sein kann wie dargestellt. Je nach den geometrischen Verhältnissen kann ein versetzter Drehpunkt günstiger sein. An der Schwenkbrücke 9 befindet sich ein Einhängelager 12 für die Schubstange 13 zur Einleitung einer Schwenkbewegung. Diese Schubstange 13 ist mit dem schwenkbaren Hebel 14 verbunden, der über eine nicht dargestellte Kurvenscheibe zwischen den Stellungen in Figur 1 und 2 bewegt wird. Die Höhenverschiebung des Untertisches 5 erfolgt über die einen Kniehebel bildenden Kniehebellaschen 11, 23 von den Kurvenscheiben 15 aus Schwenkhebel 26, 27 und über die Schubstange 25, die an den Kniehebellaschen 11, 23 angelenkt ist. Bei der Abwärtsbewegung des Untertisches 5 erfolgt zunächst eine Vertikalbewegung, bis die Werkzeug.

Führungszapfen 16 frei sind und entsprechend dem Schwenkradius Freiraum vorhanden ist. Nachfolgend setzt über die Schubstange 13 die Schwenkbewegung des Untertisches 5 ein. Die beiden Bewegungen - vertikal und schwenken - laufen bis zu einer bestimmten Winkellage der Kniehebellaschen 11, 23 überschneidend ab.
Nach einem Stop der Bewegung der Schubstange 25 und damit der unteren Kniehebellasche 11 durch eine entsprechende Gestaltung der Kurvenscheibe 15 entsteht beim Weiterschwenken des Untertisches 5 über die Schubstange 13 eine Schubbewegung auf die Unterbrücke 5 in Richtung Stapelmagazin 7. Durch eine entsprechende Gestaltung der Kurvenscheibe 15 kann zusätzlich ein Rückwärtsschwenken der unteren Kniehebellaschen 11 bis in Strecklage der beiden Kniehebellaschen 11, 23 über die Schubstange 25 und somit eine zusätzliche Schubbewegung des Untertisches 5 in Richtung der Stapelmagazine 7 erreicht werden. Während dieser Rückwärtsbewegung steht die Schubstange 13. Es wird dadurch eine sichere Übergabe der Formteile 17 in die Stapelvorrichtung 7 ermöglicht.
Die Formteile 17 werden nach Erreichen der Endlage des Untertisches 5 über eine pneumatisch- oder kurvenbetätigte Auswerfereinrichtung in die Stapeleinrichtung 7 gestoßen. Die Rückwärtsbewegung des Untertisches 5 in die Form-/Stanzposition erfolgt in umgekehrter Reihenfolge.

Die Antriebseinrichtung 22 kann auch in der Weise ausgebildet sein, dass die beiden Schubstangen 13, 25 über jeweils einen Kurbeltrieb bewegt werden, der von einem Servomotor angetrieben wird. Ein solcher Antrieb ist aus der DE 40 33 534 A1 bekannt.

Bei einem Schwenkwinkel des Untertisches 6 zwischen 20° und 50° ergibt sich für die Formteile 17 eine Stapelposition, in der sich nahezu alle üblichen Gestaltungsvarianten ohne den Aufwand komplizierter Abhol-Stapeleinrichtungen stapeln lassen. Die weitere Handhabung der Behälterstapel kann durch deren Absetzen auf einem Förderband vorgenommen werden.

## Patentansprüche

1. Vorrichtung zum Formen und Ausstanzen von Behältern (17) aus einer Folienbahn (19) aus thermoplastischem Kunststoff, mit einer intermittierenden Transporteinrichtung (2) zum horizontalen Führen der Folienbahn (19), mit einem oberhalb der Folienbahn (19) angeordneten Obertisch (3) zur Aufnahme des Oberteils (4) und einem unterhalb der Folienbahn (19) angeordneten höhenverschiebbaren und schwenkbaren Untertisch (5) zur Aufnahme des Unterteils (6) eines kombinierten Form-/Stanzwerkzeuges, wobei der Untertisch (5) an einer um einen Drehpunkt (10) schwenkbaren Schwenkbrücke (9) verschiebbar geführt ist, **dadurch gekennzeichnet, dass** der Untertisch (5) über Kniehebellaschen (11, 23) an der Schwenkbrücke (9) gehalten ist, die über eine erste Schubstange (25) von einer seitlich angeordneten Antriebseinrichtung (22) aus bewegt werden, wobei die Antriebseinrichtung (22) über eine zweite Schubstange (13) auch die Schwenkbewegung der Schwenkbrücke (9) bewirkt.

2. Vorrichtung nach Anspruch 1, **dadurch gekennzeichnet, dass** der Untertisch (5) über Führungssäulen (8) zur Schwenkbrücke (9) geführt ist.

3. Vorrichtung nach Anspruch 1 oder 2, **dadurch gekennzeichnet, dass** die Schwenkbrücke (9) und die unteren Kniehebellaschen (11) im gleichen Drehpunkt (10) gelagert sind.

4. Vorrichtung nach Anspruch 1 oder 2, **dadurch gekennzeichnet, dass** die Schwenkbrücke (9) und die unteren Kniehebellaschen (11) in zueinander versetzten Drehpunkten gelagert sind.

5. Vorrichtung nach einem der Ansprüche 1 bis 4, **dadurch gekennzeichnet, dass** die Antriebseinrichtung (22) kurvenbetätigt ist.

6. Vorrichtung nach einem der Ansprüche 1 bis 5, **dadurch gekennzeichnet, dass** die Antriebseinrichtung (22) zum Bewegen der Kniehebellaschen (11, 23) so gestaltet ist, dass diese beim oder nach dem Schwenken des Untertisches (5) in Stapellage in Strecklage gebracht werden.

7. Vorrichtung nach einem der Ansprüche 1 bis 6, **dadurch gekennzeichnet, dass** der Schwenkwinkel des Untertisches (5) zwischen 20° und 50° liegt.

## Claims

1. Device for moulding and punching out containers (17) from a film strip (19) of thermoplastic synthetic material, comprising an intermittent transport device (2) for horizontally guiding the film strip (19), with an upper table (3), which is arranged above the film strip (19), for reception of the upper part (4) and a lower table (5), which is arranged below the film strip (19) and which is displaceable in height and pivotable, for receiving the lower part (6) of a combined moulding and punching tool, wherein the lower table (5) is guided to be displaceable at a pivot bridge (9) pivotable about a fulcrum (10), **characterised in that** the lower table (5) is mounted at the pivot bridge (9) by way of toggle lever straps (11, 23), which are moved out by way of a first thrust rod (25) by a laterally arranged drive device (22), wherein the drive device (22) also produces the pivot movement of the pivot bridge (9) by way of a second thrust rod (13).

2. Device according to claim 1, **characterised in that** the lower table (5) is guided relative to the pivot bridge (9) by way of guide columns (8).

3. Device according to claim 1 or 2, **characterised in that** the pivot bridge (9) and the lower toggle lever straps (11) are mounted at the same fulcrum (10).

4. Device according to claim 1 or 2, **characterised in that** the pivot bridge (9) and the lower toggle lever straps (11) are mounted at fulcra offset relative to one another.

5. Device according to one of claims 1 to 4, **characterised in that** the drive device (22) is cam-actuated.

6. Device according to one of claims 1 to 5, **characterised in that** the drive device (22) for movement of the toggle lever straps (11, 23) is so designed that these are brought into extended position during or after pivotation of the lower table (5) into stacking position.

7. Device according to one of claims 1 to 6, **characterised in that** the pivot angle of the lower table (5) lies between 20° and 50°.

## Revendications

1. Dispositif pour former et découper des récipients (17) dans une bande de feuille (19) en matière synthétique thermoplastique, comprenant un dispositif de transport intermittent (2) destiné à faire défiler horizontalement la bande de feuille (19), une table supérieure (3) disposée au-dessus de la bande de feuille (19), destinée à recevoir la partie supérieure (4) d'un outil combiné de formage/découpage et une table inférieure réglable en hauteur et pivotante (5), disposée au-dessous de la bande de feuille (19) et destinée à recevoir la partie inférieure (6) de l'outil, la table inférieure (5) étant guidée mobile en translation le long d'un pont pivotant (9) qui peut pivoter autour d'un point de rotation (10),
**caractérisé en ce que**
la table inférieure (5) est tenue par l'intermédiaire de leviers à genouillère (11, 23) au pont pivotant (9), lequel peut être déplacé, au moyen d'une première bielle de poussée (25), par un dispositif d'entraînement (22) disposé latéralement, le dispositif d'entraînement (22) déterminant aussi le mouvement de pivotement du pont pivotant (9) au moyen d'une deuxième bielle de poussée (13).

2. Dispositif selon la revendication 1,
**caractérisé en ce que**
la table inférieure (5) est guidée par rapport au pont pivotant (9) au moyen de colonnes de guidage (8).

3. Dispositif selon la revendication 1 ou 2,
**caractérisé en ce que**
le pont pivotant (9) et les leviers à genouillère inférieurs (11) sont articulés au même point de rotation (10).

4. Dispositif selon la revendication 1 ou 2,
**caractérisé en ce que**
le pont pivotant (9) et les leviers à genouillère inférieurs (11) sont articulés sur des centres de rotation décalés l'un par rapport à l'autre.

5. Dispositif selon une des revendications 1 à 4,
**caractérisé en ce que**
le dispositif d'entraînement (22) est actionné par came.

6. Dispositif selon une des revendications 1 à 5,
**caractérisé en ce que**
le dispositif d'entraînement (22) destiné au déplacement des leviers à genouillère (11, 23) est configuré de manière que ces derniers soient placés en position d'extension au moment du pivotement ou après le pivotement de la table inférieure (5) qui la place dans la position d'empilement.

7. Dispositif selon une des revendications 1 à 6,
**caractérisé en ce que**
l'angle de pivotement de la table inférieure (5) se trouve entre 20 et 50°.
